# FASCICULE DE BREVET EUROPEEN

(11) **EP 2 764 332 B1**
(45) Date de publication et mention de la délivrance du brevet: **26.06.2019**
(21) Numéro de dépôt: 12839393.1
(22) Date de dépôt: 09.10.2012
(51) Int. Cl.: G01F 3/06, G01F 3/10, G01F 3/00, G01F 3/12, E03B 7/07, E03B 7/04, E03B 1/04

(54) **UN SYSTEME DE TELEMESURE DE CONSOMMATION D'EAU**
TELEMETRIESYSTEM FÜR WASSERVERBRAUCH
TELEMETRY SYSTEM FOR WATER CONSUMPTION

(30) Priorité: 09.10.2011 DZ 110691
(43) Date de publication de la demande: 13.08.2014
(73) Titulaire: Lakhdari, Mustapha, Tipasa 42000 (DZ)
(72) Inventeur: Lakhdari, Mustapha, Tipasa 42000 (DZ)
(74) Mandataire: Louiset, Raphaël
(86) Numéro de dépôt international: PCT/DZ2012/000004
(87) Numéro de publication internationale: WO 2013/053363

(56) Documents cités:
- EP-A2- 1 170 424
- CA-A1- 2 437 426
- DE-A1-102009 019 409
- DE-A1-102010 027 171
- DE-A1-102010 046 417
- DE-A1-102010 055 187
- DE-U1-202008 015 991
- FR-A1- 2 915 570
- US-A- 5 427 350
- US-A- 5 721 383
- US-A1- 2004 182 439
- Anonymous: "iHouse SmartFaucet: Wasserhahn mit Touchscreen und Gesichtserkennung - CNET.de", , 21 avril 2009 (2009-04-21), XP055149618, Extrait de l'Internet: URL:http://www.cnet.de/41207292/ihouse-sma rtfaucet-wasserhahn-mit-touchscreen-und-ge sichtserkennung/ [extrait le 2014-10-29]
- RACHELLE M. ET AL.: 'Alarming visual display monitors affecting shower end use water and energyconservation in Australian residential households' RESOURCES, CONSERVATION AND RECYCLING, [en ligne] vol. 54, 07 Mars 2010, pages 1117 - 1127, XP027197240 Extrait de l'Internet: <URL:http://dx.doi.org/10.1016/j.resconrec. 2010.03.004> [extrait le 2013-03-20]
- 'iHouse SmartFaucet: Wasserhahn mit Touchscreen und Gesichtserkennung' 21 Avril 2009, XP055149618 Extrait de l'Internet: <URL:http://www.cnet.de/41207292/ihouse-sma rtfaucet-wasserhahn-mit-touch screen-und-gesichtserkennung> [extrait le 2013-03-26]

## Description

### Domaine technique auquel se rappel l'invention :

La présente invention est un système de télémesure et d'affichage de consommation d'eau et de régulation de débit d'eau aux robinets. Cette invention peut être utilisée dans le domaine hydraulique et dans les systèmes de distribution d'eau et plus particulièrement dans les robinets, les vannes et la consommation domestique.

### État de la technique antérieure:

Il existe plusieurs produits sur le marché pour limiter le débit d'eau, ou pour mesurer la consommation d'eau. En général, il s'agit de compteurs d'eau avec des fonctionnalités standardisées qui ne répondent pas à certains besoins spécifiques (la mesure de consommation en temps réel, stockages des mesures, détection des fuites et des consommations excessives, .....Etc.). Un dispositif selon le préambule de la revendication 1 est connu du document EP 1 171 424 A2.

### But de l'invention :

L'invention a pour but principal de réduire la consommation d'eau par le biais d'un système électromécanique qui permet à l'utilisateur de connaître son mode de consommation et de corriger les consommations excessives par l'utilisation d'un dispositif électromécanique de régulation automatique qui s'intègre à une vanne ou robinet.

### Énoncé des figures :

Les figures en annexe donnent, à titre d'exemples non limitatifs, une description schématique de l'invention :
- Fig. 1 est un schéma général de système,
- Fig. la est un schéma de module externe adapté à la sortie de robinet,
- Fig. 2 est une coupe longitudinale de la partie mécanique du dispositif électromécanique du système.
- Fig. 2a est une vue de droit de la partie mécanique du dispositif électromécanique du système.
- Fig. 2b est une vue de dessus de la partie mécanique du dispositif électromécanique du système.
- Fig. 2c est une vue de face de la partie mécanique du dispositif électromécanique du système.
- Fig. 2d est une vue arrière de la partie mécanique du dispositif électromécanique du système.
- Fig. 3 est une vue perspective d'avant de la partie mécanique du dispositif électromécanique du système avec le moteur et dynamo.
- Fig. 3a est une vue perspective d'arrière de la partie mécanique du dispositif électromécanique du système avec le moteur et dynamo.
- Fig. 4 est le schéma de la partie électronique du dispositif électromécanique du système.

### Présentation de l'essence (la substance) de l'invention :

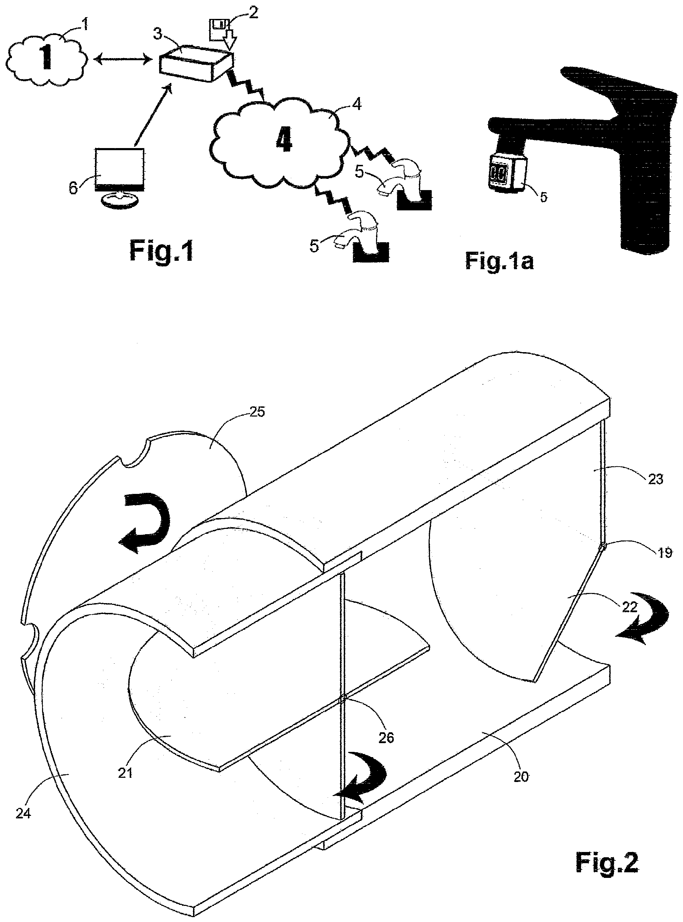

Dans la Figure 1, il y a des dispositifs électromécanique 5 reliés par un réseau de communication sans fil 4 (Bluetooth, ZigBee, Wifi,.....etc.) à un dispositif électronique de stockage et d'analyse 3 qui contient un support de stockage externe 2 (USB, Carte mémoire SD, .....Etc.) ; Le dispositif de stockage 3est relié à un écran 6, et connecté à l'internet 1.

Le dispositif électromécanique 5 peut être intégré à l'intérieur d'un robinet ou comme un module externe qui s'adapte à la sortie de tous types de robinets comme représenté dans la Figure 1a.

Le dispositif électromécanique 5 est responsable de l'ouverture automatique du robinet et aussi du contrôle de débit d'eau, des mesures et de l'affichage des consommations d'eau et de l'envoi des mesures de consommations d'eau par le réseau sans-fil 4 au dispositif 3.

Le dispositif 3 contient un processeur, un émetteur-récepteur radio et un support de stockage externe 2, et peut être branché avec l'écran 6 et un clavier.

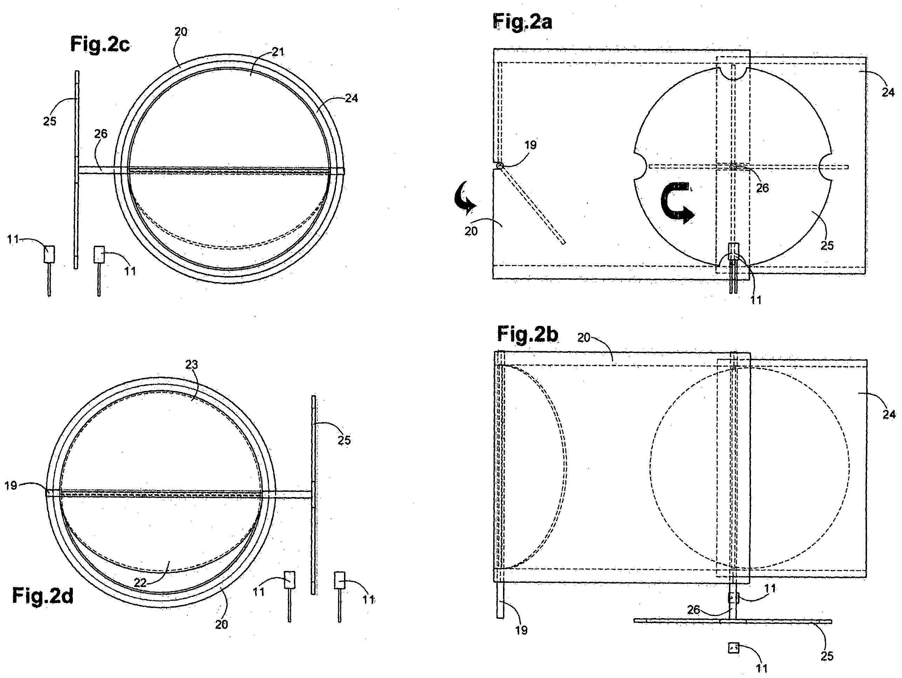

Dans la partie mécanique du dispositif électromécanique 5 présenté sur la figure 2 dispose de deux tubes 20 et 24, Une partie du tube 24pénètre dans le tube 20 pour fixer l'axe 26, et on observe aussi deux demi-cylindres à l'intérieur de tube 20 : Le premier demi-cylindre 23 fixé verticalementetle second demi-cylindre 22 reliéet tourne sur l'axe 19 fixé sur le tube 20.

La noria 21 montée avec la roue 25 par l'axe 26 qui relie les deux à l'intérieur de tube 24.

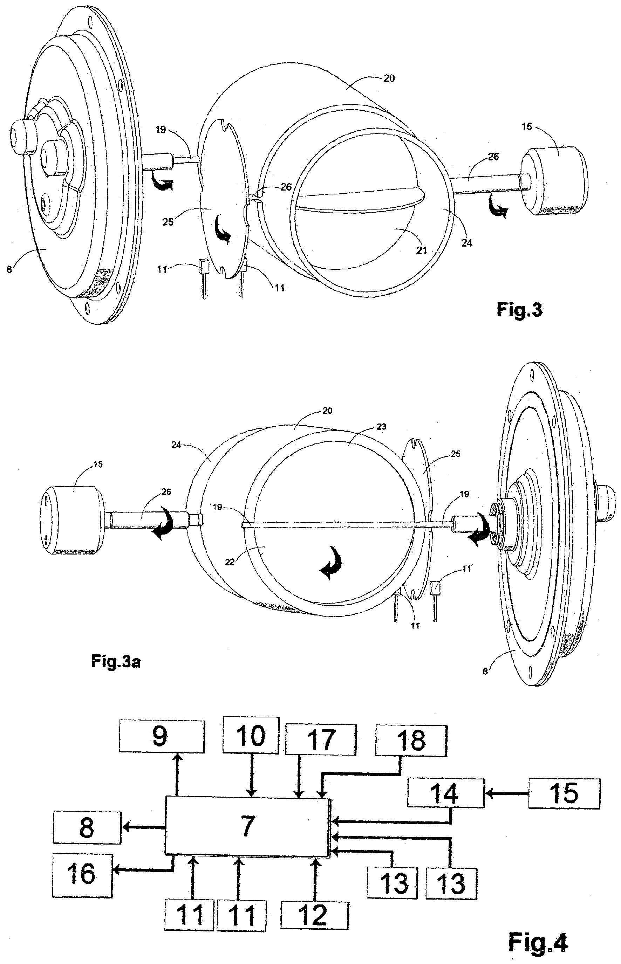

Dans la Figure 3, la noria 21 est relié avec la dynamo électrique 15 et la roue 25 par l'axe 26. Les deux capteurs infrarouges 11 (un émetteur et un récepteur) placés au même niveau des perforations situées sur le pourtour de la roue 25.

Dans la Figure 3A, le moteur électronique 8 et le demi-cylindre 22 sont relie par l'axe 19.Le moteur 8 pourrait être lié à l'axe 19 à travers les engrenages.

Le moteur 8 fait tourner le demi-cylindre 22, responsable d'ouvrir le tube20 pour que l'eau passe en dessous du demi-cylindre 23. Ainsi, en contrôlant le degré de rotation du demi-cylindre 22 on contrôle le degré d'ouverture du tube 20 et par conséquent la quantité d'eau qui passe dans le dispositif électromécanique 5.

En coulant en dessous du demi-cylindre 22 sans dépasser le niveau du milieu, l'eau va exercer une pression qui fera tourner la noria 21. La vitesse de rotation de la noria 21 sera en fonction du débit d'eau.

La roue 25 et la dynamo 15 tournent en même temps que la noria 21 et à la même vitesse.

La rotation de la roue 25coupera et activerale signal entre les deux capteurs infrarouge 11 en fonction de son passage à travers les perforations, ce qui nous donne le nombre et le degré exact de rotation de la roue 25 et la noria 21, indiquant en même temps la valeur du débit d'eau.

Dans la partie électronique du dispositif électromécanique 5 représenté sur la figure 4, un processeur 7 relié avec capteur infrarouge 10 (détecteur des mains et de présence), un afficheur 9, un émetteur-récepteur radio 16, moteur 8, deux capteurs infrarouge 11 (un émetteur et un récepteur) et deux autre capteurs infrarouge 13(détecteur des mains), deux boutons poussoir 17 et 18, une caméra 12 et une batterie rechargeable 14 branché à la dynamo 15.

Il existe différentes méthodes utilisées sur les capteurs infrarouges 10 et 13 pour détecter les mains : des capteurs fonctionnant par sensibilité à la température du corps humain, Ou émetteur et récepteur par la collision de signal avec la main et le retour vers le récepteur.

La dynamo 15 permettra de produire une énergie électrique et recharger la batterie 14 qui alimentera la partie électronique du système.

Quand le capteur infrarouge 10 détecte la présence (main) d'un corps humain il donne un signal au processeur 7, qui fait démarrée le moteur 8 pour tourner le demi-cylindre 22 et ouvrir le dispositif électromécanique 5 avec un degré précis pour que l'eau commence à couler, le processeur 7 reçoit un signal à partir des deux capteurs infrarouge 11 à chaque fois que le signal passe entre eux avec la rotation de la roue 25. Le processeur 7 commence à calculer la vitesse de rotation de la roue 25 par le nombre de coupure du signal entre les deux capteurs infrarouge 11 dans le temps et qui représente le débit d'eau qui passe dans le dispositif électromécanique 5.

Le processeur 7 contrôle le moteur 8, et calcule en même temps le débit d'eauqui passe dans le dispositif électromécanique 5 (par la vitesse de rotation de roue 25), et quand il arrive à la valeur de débit choisi, il arrête le moteur 8,Donc, il fixe le demi-cylindre 22 à un degré et une position précise pour fixerla valeur du débit d'eau qui passe dans le dispositif électromécanique 5.

Pour contrôler le débit d'eau du dispositif électromécanique 5 manuellement, il y'a les deux capteurs infrarouge 13 dont un est placé à droite et l'autre à gauche du dispositif électromécanique 5, Avec le passage de la main au côté droit du dispositif électromécanique 5, le capteur infrarouge 13 qui se trouve à droite détectera la présence de la main et envoie un signal électronique au processeur 7pour commander le moteur 8 et augmenter le degré de rotation du demi-cylindre 22 en d'autres termes le degré d'ouverture pour augmenter la valeurdu débit de de l'eau qui passe dans le dispositif électromécanique 5, et la même chose pourle capteur infrarouge 13 positionné à gauche pour diminuer la valeur du débit d'eau.

Le processeur 7 calcule la quantité d'eau qui passe dans le dispositif électromécanique 5par le produit de débit d'eau et le temps ainsi, affichera à chaque utilisation la valeur de cette quantité sur l'afficheur 9 en temps réel, pour que l'utilisateur puisse observer sa consommation en temps réel.

Pour chaque nouvelle utilisation du dispositif l'afficheur 9 indique une valeur initiale égale à 0.

L'utilisateur peut déterminer son besoin en volume d'eau sortie du dispositif électromécanique 5, quand il appuie sur le bouton poussoir 17, le processeur 7 ajoute 0,1 à la valeur affichée sur l'afficheur 9, et s'il est vide sa valeur sera égale à 0, Même chose quand l'utilisateur appuie sur le bouton poussoir 18, le processeur 7 soustrait 0.1 de la valeur affichée sur l'afficheur 9, et pour augmenter ou diminuer la valeur rapidement il faut appuyer pendant un certain momentsur un des boutons 17 ou 18.

Après quelque secondes si la valeur indiquée sur l'afficheur 9 n'a pas changé, l'eau commencera à couler, et le processeur 7 soustrait le volume d'eau sortie du dispositif électromécanique 5 à la valeur affichée sur l'afficheur 9 et affiche cette nouvelle valeur sur l'afficheur 9 jusqu'à ce qu'il atteint le niveau 0 pour que l'eau s'arrête de couler. Cependant, il existe une possibilité d'ajouter un autre bouton pour donner l'ordre au processeur 7 pour que l'eau commence à couler. Il est bon de souligner que la valeur affichée sur l'afficheur 9 est en litre.

Quand l'utilisateur retire ses mains, le capteur infrarouge 10 détectera immédiatement leur absences, aussitôt le processeur 7 commandera au moteur8 de fermer le dispositif électromécanique 5, ce qui arrêtera l'écoulement d'eau.

Pour chaque utilisation dudispositif électromécanique 5, la caméra 12 prend une photo de visage de l'utilisateur, le processeur 7 envoie par le émetteur-récepteur radio 16 la photo de l'utilisateur et les mesures des consommations d'eau sans fil à travers le réseau 4 au dispositif de stockage 3qui va stocker la photo et les mesures des consommations d'eau pour toute l'utilisation des dispositifs électromécanique 5.

Les données relatives à la consommation d'eau seront traitées et analysées par le processeur du dispositif 3, en tenant compte de plusieurs paramètres :
- Le climat (région géographique).
- Le nombre des personnes dans la demeure.
- Le but d'utilisation du dispositif (àbut personnel tel que la cuisine, la salle de bains, travaux liés à l'agriculture)
- Les habitudes des personnes (les anciennes consommations)
- L'identité de l'utilisateur (par la reconnaissance faciale à travers la photo déjà prise)
- ........etc.

Ou toute autre information qui peut être utile dans l'analyse des mesures de consommations.

L'utilisateur peut faire entrer ses informations à l'aide du clavier et de l'écran 6, et aussi configurer les dispositifs électromécaniques 5 pour contrôler les propriétés à travers le dispositif 3.

Un seul dispositif de stockage3 peut gérer plusieurs dispositifs électromécaniques5.

A l'aide de l'analyse des mesures de consommations, le dispositif 3 présentera une nouvelle régulation du débit d'eau (en changeant le degré de rotation du moteur 8) sur le dispositif électromécanique 5, via l'émetteur-récepteur radio 16 pour que le processeur 7 puisse l'appliquer lors de la nouvelle utilisation du système.

Le calcule de nouveau débit de l'eau dépend de l'approche entre le débit d'utilisation habituel et le débit idéal, jusqu'à atteindre le débit idéale.

Et aussi à l'aide de l'analyse des mesures de consommations, le dispositif 3 calcule la consommation idéale (les besoins réels) d'une durée précisé et la comparé avec la consommation réelle totale sur cette durée, le totale de la consommation peut être d'un seul robinet (Le dispositif électromécanique 5) et de plusieurs tout dépend de l'utilisation de robinet, Car la consommation moyen diffère tout dépend l'utilisation(Cuisine, Douche, Toilette,....etc.). La consommation réelle se calcule par rapport au paramètres précédents, pour identifier si elle est proche ou loin des besoins réels et les précisé en quantité.

Le dispositifs affichera sur l'écran 6 les statistiques de consommation d'accueil des utilisateurs et les alertes de fuites, de pertes ou de prodigalités de l'eau, mais aussi les suggestions ou les améliorations pouvant être faites.

L'analyse des données relatives à la consommation de plusieurs utilisateurs permettra de savoir les consommations de chaque utilisateur par sa photo et l'heure d'utilisation du dispositif électromécanique 5, Ceci permet de définir les consommateursexcessifs, et d'analyser les tendances des consommateurs également d'organiser la consommation d'eau de manière plus rationnelle.

Si un utilisateur du système, accepte de partager les données relatives à sa consommation d'eau avec d'autres par internet 1 et vice versa pour sa région. Cela améliore les capacités d'analyse d'accueil, car il peut suivre les tendances actuelles.

Dans le cas où le dispositif 3 n'est pas connecté à internet, les données peuvent être transportées par le support de stockage externe 2.

D'après la généralisation de ce système, la société qui fait la gestion et la distribution d'eau dans la région ou la ville reçoit les détailssur les consommations d'eau à partirdes dispositifs 3 qui sont connectés à internet, pour connaitre les consommations réelles et besoins réelles de chaque ménage (qui compte à plusieurs dispositifs de stockage 3 et des dispositifs électromécanique 5) ou de toute une région, ce qui permettra d'améliorer la gestion et la distribution d'eau dans la région.

## Revendications

1. Système de télémesure, d'affichage et de régulation d'un débit d'eau, ce système comprenant un dispositif (5) électromécanique destiné à être positionné à la sortie d'un robinet d'eau, le dispositif (5) électromécanique comprenant :
- un afficheur (9),
- un processeur (7) apte à calculer le débit d'eau traversant le dispositif (5),
- des moyens de paramétrage comprenant deux boutons poussoir (17,18) pour paramétrer un volume maximum que le dispositif électromécanique (5) doit laisser passer, f
- un émetteur- récepteur radio (16),
le système comprenant un outre un dispositif (3) de stockage étant apte à analyser et stocker des données fournies via l'émetteur- récepteur radio (16) par le dispositif électromécanique (5), **caractérisé en ce que** le dispositif électromécanique comprend
- un premier tube (24) et un deuxième tube (20), une partie du premier tube (24) pénétrant dans le deuxième tube (20),
- une noria (21) montée à l'intérieur du premier tube (24) et reliée à une roue (25) par un premier axe (26), la roue (25) étant située à l'extérieur du premier tube (24),
- des moyens de mesure de la vitesse de rotation de la roue (25) comprenant deux capteurs infrarouges (11) placés au niveau de perforations situées sur le pourtour de la roue (25),
- des moyens de régulation du débit d'eau du dispositif (5) électromécanique comprenant un moteur (8) et un demi-cylindre (22) reliés l'un à l'autre par un deuxième axe (19) le demi-cylindre (22) étant situé à l'intérieur des tubes (20,24), ces moyens de régulation étant aptes à réguler le passage de l'eau dans le deuxième tube (20),
- une caméra (12) destinée à prendre une photo du visage d'un utilisateur du dispositif (5) électromécanique,

2. Système de télémesure selon la revendication 1, **caractérisé en ce que** le dispositif (**5**) électromécanique comprend des moyens (**13**) de régulation manuelle du débit d'eau.

3. Système selon l'une des revendications 1 ou 2, **caractérisé en ce que** le dispositif (**3**) de stockage comprend un écran (**6**) d'affichage et un support (**2**) de stockage externe de données.
- Système de télémesure selon l'une des revendications précédentes, **caractérisé en ce que** le dispositif (**5**) électromécanique comprend une dyna**m**o (**15**) montée sur le premier axe (**26**) et une batterie (**14**).

4. Procédé de télémesure, d'affichage et de régulation d'un **dé**bit d'eau opéré au **mo**yen d'un système de télémesure, d'affichage et de régulation selon l'une des revendications précédentes, **caractérisé en ce que** le procédé comprend les étapes suivantes :
- paramétrage d'un volume d'eau maximum que le dispositif (**5**) électromécanique doit laisser passer, ce paramétrage étant effectué par le biais des moyens (**17, 18**) de paramétrage,
- ouverture des moyens (**8, 22**) de régulation,
- calcul du débit d'eau traversant le dispositif (**5**) électromécanique, ce calcul étant effectué par le processeur (**7**) grâce aux données envoyées par les moyens (**11**) de mesure de la vitesse de la roue (**25**),
- affichage en temps réel sur l'afficheur (**9**) du volume d'eau ayant traversé le dispositif (**5**) électromécanique,
- fermeture des moyens (**8, 22**) de régulation lorsque le volume maximum préalablement paramétré est atteint, ou lorsque des moyens (**10**) de détection détectent l'absence d'un utilisateur,
le procédé comprenant en outre, une étape :
- de prise d'une photo du visage de l'utilisateur au moyen de la caméra (**12**),
- d'envoi de la photo ainsi prise, et de la consommation d'eau associée à l'utilisateur au dispositif (**3**) de stockage,
- de stockage et d'analyse des données ainsi transmises, dans le dispositif (**3**) de stockage.

5. Procédé selon la revendication 5, **caractérisé en ce que** le procédé comprend une étape de régulation manuelle du débit d'eau via des moyens (**13**) de régulation manuelle.

6. Procédé selon l'une des revendications 5 ou 6, **caractérisé en ce que** le procédé comprend une étape de production d'énergie électrique au moyen d'une dynamo (**15**) électrique montée sur le premier axe (**26**) et permettant d'alimenter en énergie électrique une batterie (**14**).

7. Procédé selon l'une des revendications 5 à 7, **caractérisé en ce que** l'analyse des données est effectuée en tenant compte d'une pluralité de paramètre parmi lesquels :
- le climat,
- la région géographique,
- le nombre de personnes dans le lieu où est installé le dispositif (**5**) électromécanique,
- utilisation à titre personnel ou professionnel,
- habitudes des personnes aux moyens des données stockées,
- identité de l'utilisateur,
les données analysées permettent de calculer une consommation prédéterminée d'une durée précisée, et déterminer des statistiques de consommation, de pertes et des prodigalités de l'eau ainsi que des suggestions d'amélioration de la consommation, ces statistiques et améliorations étant affichées sur l'écran (**6**) d'affichage du dispositif (**3**) de stockage, ces statistiques et améliorations pouvant être partagées via internet.

8. Procédé selon l'une des revendications 5 à 8, **caractérisé en ce que** le procédé comprend une étape de reconnaissance faciale.

9. Procédé selon l'une des revendications 5 à 9, **caractérisé en ce que,** les données transmises et analysées par le dispositif (**3**) de stockage sont utilisées pour réguler le débit d'eau distribué par le biais des moyens (**22**) de régulation.

## Patentansprüche

1. Telemetrie-, Anzeige und Regelsystem einer Wassermenge, wobei dieses System eine elektromechanische Vorrichtung (6) umfasst, die zur Positionierung am Ausgang eines Wasserhahns bestimmt ist, wobei die elektromechanische Vorrichtung umfasst:
- eine Anzeige (9),
- einen Prozessor (7), der zur Berechnung der die Vorrichtung (5) durchquerenden Wassermenge imstande ist,
- Parametriermittel, umfassend zwei Druckknöpfe (17, 18) zum Parametrieren eines maximalen Volumens, das die elektromechanische Vorrichtung (5) hindurchlassen muss,
- einen Funksender/-empfänger (16),
wobei das System ferner eine Speichervorrichtung (3) umfasst, die imstande ist, über den Funksender/-empfänger (16) von der elektromechanischen Vorrichtung (5) bereitgestellten Daten zu analysieren und zu speichern, **dadurch gekennzeichnet, dass** die elektromechanische Vorrichtung umfasst:
- ein erstes Rohr (25) und ein zweites Rohr (20), wobei ein Teil des ersten Rohrs (24) in das zweite Rohr (20) eindringt,
- ein Schöpfrad (21), das im Inneren des ersten Rohrs (24) angebracht und mit einem Rad (25) durch eine erste Achse (26) verbunden ist, wobei sich das Rad (25) außerhalb des ersten Rohrs (24) befindet,
- Messmittel der Rotationsgeschwindigkeit des Rades (25), umfassend zwei Infrarotsensoren (11), die im Bereich von Durchbrüchen platziert sind, die sich auf dem Umfang des Rades (25) befinden,
- Regelmittel der Wassermenge der elektromechanischen Vorrichtung (5), umfassend einen Motor (8) und einen Halbzylinder (22), die durch einen zweite Achse (19) miteinander verbunden sind, wobei sich der Halbzylinder (22) im Inneren der Rohre (20, 24) befindet, wobei diese Regelmittel imstande sind, den Durchgang des Wassers in dem zweiten Rohr (20) zu regeln,
- eine Kamera (12), die zur Aufnahme eines Fotos des Gesichts eines Benutzers der elektromechanischen Vorrichtung (5) bestimmt ist.

2. Telemetriesystem nach Anspruch 1, **dadurch gekennzeichnet, dass** die elektromechanische Vorrichtung (5) manuelle Regelmittel (13) der Wassermenge umfasst.

3. System nach einem der Ansprüche 1 oder 2, **dadurch gekennzeichnet, dass** die Speichervorrichtung (3) einen Anzeigebildschirm und einen externes Datenspeichermedium (2) umfasst.
- Telemetriesystem nach einem der vorangehenden Ansprüche, **dadurch gekennzeichnet, dass** die elektromechanische Vorrichtung einen Dynamo (15) umfasst, der auf der ersten Achse (26) angebracht ist und eine Batterie (14).

4. Telemetrie-, Anzeige und Regelverfahren einer Wassermenge, durchgeführt mittels einer Telemetrie-, Anzeige- und Regelvorrichtung nach einem der vorangehenden Ansprüche, **dadurch gekennzeichnet, dass** das Verfahren die folgenden Schritte umfasst:
- Parametrieren eines maximalen Wasservolumens, welches die elektromechanische Vorrichtung hindurchlassen muss, wobei dieses Parametrieren anhand der Parametriermittel (17, 18) durchgeführt wird,
- Öffnen der Regelmittel (8, 22),
- Berechnen der Wassermenge, welche die elektromechanische Vorrichtung (5) durchquert, wobei diese Berechnung durch den Prozessor (7) dank der von den Messmitteln (11) der Geschwindigkeit des Rades (25) bereitgestellten Daten durchgeführt wird,
- Anzeigen, in Echtzeit auf der Anzeige (9), des Wasservolumens, welches die elektromechanische Vorrichtung (5) durchquert hat,
- Schließen der Regelmittel (8, 22), wenn das maximale, zuvor parametrierte Volumen erreicht ist, oder wenn Detektionsmittel (10) die Abwesenheit eines Benutzers ermitteln,
wobei das Verfahren ferner einen Schritt umfasst:
- der Aufnahme eines Fotos des Gesichts des Benutzers mittels der Kamera (12),
- des Versendens des derart aufgenommenen Fotos und des dem Benutzer zugeordneten Wasserverbrauchs an die Speichervorrichtung (3),
- des Speicherns und des Analysierens der derart übermittelten Daten in der Speichervorrichtung (3).

5. Verfahren nach Anspruch 5, **dadurch gekennzeichnet, dass** das Verfahren einen manuellen Regelschritt der Wassermenge über manuelle Regelmittel (13) umfasst.

6. Verfahren nach einem der Ansprüche 5 oder 6, **dadurch gekennzeichnet, dass** das Verfahren einen Schritt der Erzeugung elektrischer Energie mittels eines elektrischen Dynamos (15) umfasst, der auf der ersten Achse (26) angebracht ist und erlaubt, eine Batterie mit elektrischer Energie zu versorgen.

7. Verfahren nach einem der Ansprüche 5 bis 7, **dadurch gekennzeichnet, dass** die Analyse der Daten unter Berücksichtigung einer Vielzahl von Parametern durchgeführt wird, zu denen gehören:
- das Klima,
- die geografische Region,
- die Anzahl von Personen an dem Ort, wo die elektromechanische Vorrichtung (5) installiert ist,
- die private oder berufliche Nutzung,
- Gewohnheiten der Personen mittels der gespeicherten Daten,
- Identität des Benutzers,
wobei die analysierten Daten erlauben, einen vorher festgelegten Verbrauch einer präzisierten Dauer zu berechnen und Verbrauchs-, Verlust- und Verschwendungsstatistiken des Wassers sowie Verbesserungsvorschläge des Verbrauchs zu bestimmen, wobei diese Statistiken und Verbesserungen auf dem Anzeigebildschirm (6) der Speichervorrichtung (3) angezeigt werden, wobei diese Statistiken und Verbesserungen über das Internet teilbar sind.

8. Verfahren nach einem der Ansprüche 5 bis 8, **dadurch gekennzeichnet, dass** das Verfahren einen Schritt der Gesichtserkennung umfasst.

9. Verfahren nach einem der Ansprüche 5 bis 9, **dadurch gekennzeichnet, dass** die von der Speichervorrichtung (3) übermittelten und analysierten Daten verwendet werden, um die anhand der Regelmittel (22) ausgegebene Wassermenge zu regeln.

## Claims

1. System for remote measurement, display and regulation of a water flow, this system comprising an electromechanical device (5) that will be positioned at the outlet from a water tap, the electromechanical device (5) comprising:
- a display unit (9);
- a processor (7) capable of calculating the water flow passing through the device (5);
- configuration means including two push buttons (17, 18) to configure a maximum volume that the electromechanical device (5) must allow to pass
- a radio transceiver (16)
the system also comprising a storage device (3) capable of analysing and storing data supplied through the radio transceiver (16) by the electromechanical device (5), **characterised in that** the electromechanical device comprises:
- a first tube (24) and a second tube (20); a part of the first tube (24) penetrating into the second tube (20),
- a noria (21) mounted inside the first tube (24) and connected to a wheel (25) by a first spindle (26), the wheel (25) being located outside the first tube (24),
- means of measuring the rotation speed of the wheel (25) comprising two infrared sensors (11) placed at the perforations located around the periphery of the wheel (25),
- means of regulating the water flow in the electromechanical device (5) comprising a motor (8) and a half-cylinder (22) connected to each other by a second spindle (19), the half-cylinder (22) being located inside the tubes (20, 24), these regulation means being capable of regulating the passage of water in the second tube (20),
- a camera (12) designed to take a photo of the face of a user of the electromechanical device (5).

2. Closing system according to claim 1, **characterised in that** the electromechanical device (5) comprises means (13) of manually regulating the water flow.

3. System according to one of claims 1 and 2, **characterised in that** the storage device (3) comprises a display screen (6) and an external data storage medium (2).
- Remote measurement system according to one of the preceding claims, **characterised in that** the electromechanical device (5) comprises a dynamo (15) mounted on the first axis (26) and a battery (14).

4. Method of remote measurement, display and regulation functioning by means of a remote measurement, display and regulation system according to one of the preceding claims, **characterised in that** the method comprises the following steps:
- configure a maximum water volume that the electromechanical device (5) must allow to pass, this configuration being made by configuration means (17, 18),
- open the regulation means (8, 22)
- calculate the water flow passing through the electromechanical device (5), this calculation being made by the processor (7) using data sent by the means (11) of measuring the speed of the wheel (25),
- display the water volume that passed through the electromechanical device (5) in real time on the display unit (9),
- close the regulation means (8, 22) when the previously configured maximum volume is reached, or when the detection means (10) detect that there is no user present,
the method also comprising a step
- to take a photo of the user's face using a camera (12),
- send the photo thus taken, and the water consumption associated with the user to the storage device,
- storage and analysis of the data thus transmitted, in the storage device (3).

5. Method according to claim 5, **characterised in that** the method comprises a step for manual regulation of the water flow through manual regulation means (13).

6. Method according to one of claims 5 or 6, **characterised in that** the method comprises an electrical energy production step by means of an electric dynamo (15) mounted on the first spindle (26) and used to supply electrical energy to a battery (14).

7. Method according to one of claims 5 to 7, **characterised in that** the data analysis is made taking account of a plurality of parameters including:
- the climate;
- the geographic region;
- the number of persons in the location in which the electromechanical device (5) is installed,
- use for personal or professional reasons,
- familiarity of persons with the stored data means,
the analysed data are used to calculate a predetermined consumption in a specified period, and to determine water consumption statistics, losses and wastefulness and suggestions for improving consumption, these statistics and improvements being displayed on the display screen (6) of the storage device (3), these statistics and improvements possibly being shared through Internet.

8. Method according to one of claims 5 to 8, **characterised in that** the method comprises a facial recognition step.

9. Method according to one of claims 5 to 9, **characterised in that** the data transmitted and analysed by the storage device (3)are used to regulate the water flow distributed by the regulation means.
